# EUROPÄISCHE PATENTSCHRIFT

(11) **EP 4 070 652 B1**
(45) Veröffentlichungstag und Bekanntmachung des Hinweises auf die Patenterteilung: **19.11.2025**
(21) Anmeldenummer: 22156050.1
(22) Anmeldetag: 10.02.2022
(51) Int. Cl.: A01J 27/02

(54) **KÄSEPFLEGEVORRICHTUNG ZUM BEHANDELN VON IN HORDEN AUF KÄSEBRETTERN GELAGERTEN KÄSELAIBEN**
CHEESE TREATMENT DEVICE FOR THE TREATMENT OF CHEESES STORED IN TRAYS ON CHEESE BOARDS
DISPOSITIF DE SOIN POUR FROMAGES PERMETTANT DE TRAITER DES MEULES DE FROMAGE ENTREPOSÉS REGROUPÉES SUR DES PLANCHES À FROMAGE

(30) Priorität: 02.03.2021 CH 2302021
(43) Veröffentlichungstag der Anmeldung: 12.10.2022
(73) Patentinhaber: Kaesaro AG, 9444 Diepoldsau (CH)
(72) Erfinder: Lässer, Philipp, 9444 Diepoldsau (CH); Benz, Roger, 9437 Marbach (CH)
(74) Vertreter: Gachnang AG Patentanwälte

(56) Entgegenhaltungen:
- EP-A1- 0 316 281
- EP-A1- 3 659 432

## Beschreibung

Die Erfindung bezieht sich auf eine stationäre Käsepflegevorrichtung zum Behandeln von in Horden auf Käsebrettern gelagerten Käselaiben nach dem Oberbegriff des Anspruchs 1.

Bei der Käseherstellung wird zum Herstellen der Käselaibe Käsebruch in Formen gepresst. Die Aussenfläche eines aus einer Form entnommenen Käselaibs wird von der Käseoberseite, der Käseunterseite und einer Järbseite gebildet, wobei die Järbseite die Käseoberseite mit der Käseunterseite verbindet. Die Järbseite wird auch als Käserand bezeichnet.

In vielen Käselagern werden die Käselaibe auf in Horden angeordneten Käsebrettern gereift. Horden sind Gestelle, in denen auf übereinander liegenden Ebenen jeweils nebeneinander mindestens zwei Käsebretter platziert werden können. Die Käsebretter liegen mit Bereichen Ihrer Unterseite auf Tragbereichen der Horde auf, wobei sich die Tragbereiche bei den gängigen Horden in Längs- oder Querrichtung der Käsebretter erstrecken. Der Abstand zwischen direkt übereinander liegenden Ebenen bzw. Tragbreichen ist so gewählt, dass auf den Käsebrettern Käselaibe gelagert werden können und das gewünschte Lagerklima erzielbar ist. Die Käsebretter können in einer Zugangsrichtung beidseits in die Horde bzw. aus der Horde geführt werden. Bei gängigen Horden stehen die Käsebretter in der Zugangsrichtung beidseits über die Tragbereiche der Horde vor und können dort beim Entnehmen aus der Horde oder beim Einsetzen in die Horde gehalten werden.

Während der Lagerung bzw. Reifung werden die Käselaibe regelmässig behandelt. Die Art der Behandlungen und die Häufigkeit der Behandlungen sind an die Käsesorte und das Alter der Käselaibe angepasst. Zu den gängigen Behandlungen gehören die erstmalige Behandlung im Salzbad und das wiederholte Schmieren. Das Schmieren erfolgt zum Erzielen einer gewünschten geschmacklichen Reifung mit der Bildung einer härteren Oberfläche, bzw. einer Käserinde. Beim Schmieren wird die jeweilige Oberseite und die Järbseite mittels Bürsten mit einer vorzugsweise salzhaltigen Flüssigkeit behandelt.

Wenn beispielsweise Käselaibe 7kg schwer sind und während einer 15 Monate langen Reifezeit anfänglich täglich, später weniger oft, gewendet und abgerieben bzw. geschmiert werden, so ergibt sich für das Wenden und für das Schmieren ein grosser Arbeitsaufwand, der möglichst weitgehend mit Anlagen durchgeführt wird.

EP 0 316 281 A1 und EP 3 659 432 A1 beschreiben mobile Käsebearbeitungsmaschinen mit je einem Wagen, welcher die Käsebearbeitungsmaschine auf Fahrwegen entlang von Lagergestellen verfahrbar machen, und mit einer Transfervorrichtung zum Transfer von Käsebrettern oder Käselaiben an der jeweiligen Position der Käsebearbeitungsmaschine entlang des Lagergestells von und zum Lagergestell. Mobile Käsebearbeitungsmaschinen haben den Nachteil, dass die benötigte Energie und beispielsweise benötigte Flüssigkeiten mitgeführt oder aufwändig zu- und gegebenenfalls abgeführt werden müssen.

In einem Käselager mit Horden sind Käsebretter mit Käselaiben in Horden zusammengestellt und die Horden werden mit Transportgeräten für die jeweils gewünschte Behandlung zu einer stationären Vorrichtung transportiert. Nach der Behandlung der Käselaibe werden die Horden wieder in einen ihnen zugeordneten Lagerbereich transportiert.

Die aus dem Stande der Technik bekannten stationären Vorrichtungen mit Horden umfassen einen Stapelbereich, in welchem Käsebretter und Käselaibe in eine Horde eingestapelt und aus der Horde ausgestapelt werden können. Die einzustapelnden Käselaibe werden über eine Einlagerungsstrecke zugeführt und von dieser auf ein Käsebrett geschoben. Das Käsebrett mit mindestens einem Käselaib wird anschliessend in die Horde eingesetzt. Eingestapelt werden beispielsweise Käselaibe, die ins Käselager aufgenommen werden oder Käselaibe, die aus dem Salzbad kommen. Es handelt sich somit um Käselaibe, die noch nicht auf einem Käsebrett angeordnet sind. Entsprechend wird beim Stapelbereich auch eine Zuführung von Käsebrettern vorgesehen. Die auszustapelnden Käselaibe werden von einem Käsebrett auf eine Auslagerungsstrecke geschoben und über diese zum Vertrieb abgeführt, wenn sie genügend gelagert sind. Nebst der Einlagerungs- und Auslagerungsstrecke braucht es beim Stapelbereich einen grossen Freiraum, in welchem die Transportgeräte gefahrenfrei Horden zu- und abführen können.

Die aus dem Stande der Technik bekannten Käselager mit Horden umfassen einen Schmierbereich mit einer Schmiervorrichtung und einem Freibereich für das Zu- und Abführen von Horden mit Käselaiben. Zum Schmieren müssen die Käselaibe auf den Käsebrettern von der Horde zur Schmiervorrichtung und nach dem Schmieren wieder auf die Käsebretter und mit den Käsebrettern in die Horde bewegt werden. Die Bewegungen der Käsebretter mit den Käselaiben werden von einer Fördereinrichtung durchgeführt.

Vielfach werden in Hordenlagern Horden mit den Käsebretter gewaschen. Dazu werden die Käselaibe von den Käsebrettern einer Horde entnommen und die Horde mit den Käsebrettern wird in einem Waschbereich zu einer Horden-Waschvorrichtung geführt, welche die Horden mit den Käsebrettern wäscht. Für das Zu- und Abführen von Horden benötigt der Waschbereich einen genügend grossen Freibereich.

Die bei den bekannten Lösungen für alle Behandlungsmöglichkeiten benötigte Gesamtfläche ist sehr gross, was mit hohen Gebäudekosten und grossen Fahrwegen verbunden ist.

Die erfindungsgemässe Aufgabe besteht nun darin für die Behandlungen in einem Hordenlager eine einfache Lösung mit kleinem Platzbedarf zu finden.

Diese Aufgabe wird durch eine Käsepflegevorrichtung mit den Merkmalen des Anspruchs 1 gelöst. Die abhängigen Ansprüche beschreiben alternative bzw. vorteilhafte Ausführungsvarianten, welche weitere Aufgaben lösen.

Die erfindungsgemässe Käsepflegevorrichtung umfasst mindestens eine Hordenaufnahme, eine Fördereinrichtung und eine Schmiereinrichtung, wobei die Fördereinrichtung Käsebretter mit Käselaiben zwischen einer auf der mindestens einen Hordenaufnahme angeordneten Horde und der Schmiereinrichtung bewegbar macht. Die Käsepflegevorrichtung umfasst zudem mindestens eine Übergabeeinrichtung für Käsebretter. Die mindestens eine Übergabeeinrichtung ist vom Bereich einer auf der mindestens einen Hordenaufnahme angeordneten Horde getrennt angeordnet und macht Käsebretter mit oder ohne Käselaibe an die Fördereinrichtung übergebbar und/oder von der Fördereinrichtung aufnehmbar. Die Fördereinrichtung macht Käsebretter mit oder ohne Käselaibe zwischen einer auf der mindestens einen Hordenaufnahme angeordneten Horde, der Schmiereinrichtung und der mindestens eine Übergabeeinrichtung bewegbar.

Die erfindungsgemässe Vorrichtung kann auf engem Raum mit wenigen Komponenten verschiedene Behandlungen der Käselaibe gewährleisten.

Eine vorteilhafte Käsepflegevorrichtung umfasst eine Käsebrett-Wascheinrichtung und eine erste Übergabeeinrichtung, wobei die erste Übergabeeinrichtung Käsebretter ohne Käselaibe zwischen der Fördereinrichtung und der Käsebrett-Wascheinrichtung übergebbar macht.

Bei einer weiteren vorteilhaften Ausführungsform umfasst die erste Übergabeeinrichtung auf einer ersten Höhe eine Einführung in die Käsebrett-Wascheinrichtung und auf einer zweiten Höhe eine Ausgabe aus der Käsebrett-Wascheinrichtung. Wenn gewaschene oder ungewaschene Käsebretter nicht immer direkt weitergeführt werden können, ist es zweckmässig, dass die Käsebrett-Wascheinrichtung einen Speicher für Käsebretter aufweist. Die gewaschenen Käsebretter werden dann weitergeführt, wenn die Fördereinrichtung dafür freisteht.

Damit eine Seite der Käsebretter optimal gereinigt werden kann, umfasst die Käsebrett-Wascheinrichtung vorzugsweise mindestens eine Bürste, welche mit mindestens einer Brettseite in Reinigungskontakt gelangt.

Bei einer weiteren vorteilhaften Ausführung macht eine zweite Übergabeeinrichtung Käsebretter mit oder ohne Käselaibe zwischen der Fördereinrichtung und einer Umlagerungsstrecke übergebbar. Die Umlagerungsstrecke macht Käselaibe in die Käsepflegevorrichtung einführbar oder aus dieser abführbar.

Bei einer vorteilhaften Ausführungsform umfasst die Fördereinrichtung eine Vertikalführung mit Vertikalantrieb und eine Aufnahmeeinheit zum Aufnehmen eines Käsebrettes, wobei die Aufnahmeeinheit in der Vertikalführung vom Vertikalantrieb zu vorgebbaren Vertikalpositionen bewegbar ist.

Die Aufnahmeeinheit erstreckt sich in einer Aufnahmerichtung über eine Aufnahmelänge, die mindestens so gross ist, wie die Länge von aufzunehmenden Käsebrettern. Die Aufnahmeeinheit umfasst eine Greifeinrichtung, welche in der Aufnahmerichtung über die Aufnahmelänge zwischen zwei Endpositionen verfahrbar ist und einen Greifer umfasst. Wenn bei einer Endposition ein Käsebrett angeordnet ist, so kann dessen der Aufnahmeeinrichtung zugewandter Endbereich mit dem Greifer festgeklemmt werden.

Wenn die Greifeinrichtung mit festgeklemmtem Käsebrett von der Endposition wegbewegt wird, gelangt das Käsebrett auf die Aufnahmeeinheit. Wenn ein Käsebrett vollständig auf der Aufnahmeeinheit aufgenommen ist, kann es mit einer Bewegung der Aufnahmeeinheit in der Vertikalführung an eine gewünschte Vertikalposition bewegt werden. Die Aufnahmeeinheit kann auch ohne Käsebrett an eine gewünschte Vertikalposition bewegt werden. In einer aktuellen Vertikalposition können die gewünschten weiteren Schritte durchgeführt werden.

Wenn die angefahrene Vertikalposition der Schmiervorrichtung zugeordnet ist, werden die Käselaibe vom Käsebrett an die Schmiereinrichtung übergeben oder aus dieser auf das Käsebrett übergeben. Wenn die Vertikalposition einem Platz in einer auf einer Hordenaufnahme angeordneten Horde zugeordnet ist, wird das Käsebrett an die Horde übergeben oder von dieser aufgenommen. Wenn die Vertikalposition einem Platz einer Übergabeeinrichtung zugeordnet ist, wird das Käsebrett von der Aufnahmeeinheit an die Übergabeeinrichtung übergeben oder durch die Aufnahmeeinheit von der Übergabeeinheit übernommen.

Bei einer vorteilhaften Ausführungsform ist in Aufnahmerichtung beidseits der Vertikalführung je eine Übergabeeinrichtung angeordnet, eine erste Übergabeeinrichtung zum Übergeben von Käsebrettern zwischen der Fördereinrichtung und der Käsebrett-Wascheinrichtung und eine zweite Übergabeeinrichtung zum Übergeben von Käsebrettern mit Käselaiben zwischen der Fördereinrichtung und der zweiten Übergabeeinrichtung, von welcher die Käselaibe zwischen dem Käsebrett und der Umlagerungsstrecke verschiebbar sind. Die zweite Übergabeeinrichtung kann auch ein Käsebrett ohne Käselaib von der Fördereinrichtung übernehmen, um ein leeres Käsebrett für die Aufnahme von Käselaiben von der Umlagerungsstrecke bereitzustellen.

Wenn beidseits der Vertikalführung je eine Übergabeeinrichtung angeordnet ist, so ist es zweckmässig, wenn der Fördereinrichtung eine Greifwechsel-Einrichtung zugeordnet ist. Die Greifwechsel-Einrichtung ermöglich den Wechsel des Greifers in Aufnahmerichtung vom einen Käsebrettende zum andern, bzw. von einer Endposition der Greifeinrichtung zur anderen. Dazu umfasst die Greifwechsel-Einrichtung vorzugsweise eine Ablage, auf welcher die Fördereinrichtung bei gelöstem Greifer ein Käsebrett belassen kann, um dieses nach einer Bewegung der Greifeinrichtung zur anderen Endpositionen mit dem Greifer dort wieder zu greifen.

Bei einer vorteilhaften Ausführungsform ist die Ablage einer Vertikalposition der Vertikalführung zugeordnet und umfasst beispielsweise zwei Tragprofile, die unter das Käsebrett bewegt werden können. Nach einer Bewegung der Aufnahmeeinheit nach unten liegt das Käsebrett auf den Tragprofilen auf und bei der nach unten bewegten Aufnahmeeinheit kann die Greifeinrichtung zur anderen Endpositionen bewegt werden. Danach kann die Aufnahmeeinheit wieder zur Ablage bewegt werden, um mit dem neu positionierten Greifer das Käsebrett zu ergreifen. Danach werden die Tragprofile vom Käsebrett, bzw. von der Vertikalführung, wegbewegt und das Käsebrett kann auf der Aufnahmeeinheit zu einer gewünschten Vertikalposition bewegt werden.

Die Käsepflegevorrichtung wird sehr kompakt, wenn mindestens eine Übergabeeinrichtung vertikal unterhalb einer Hordenaufnahme angeordnet ist.

Damit das Bereitstellen von Horden auf der mindestens einen Hordenaufnahme ohne grössere Unterbrüche gewährleistet werden kann, umfasst mindestens eine Hordenaufnahme einer vorteilhaften Ausführung eine horizontale Verschiebeeinrichtung. Die horizontale Verschiebeeinrichtung macht eine Horde so positionierbar, dass die Fördereinrichtung Käsebretter in die Horde und aus der Horde zu bewegen vermag.

Bei einer vorteilhaften Ausführungsform ist in Aufnahmerichtung beidseits der Vertikalführung je eine Hordenaufnahme angeordnet, eine davon oberhalb der Übergabeeinrichtung zum Übergeben von Käsebrettern zwischen der Fördereinrichtung und der Käsebrett-Wascheinrichtung und eine oberhalb der Übergabeeinrichtung zum Übergeben von Käselaiben zwischen der Fördereinrichtung und einer Umlagerungsstrecke.

Die Schmiereinrichtung umfasst vorzugsweise auch eine Schiebevorrichtung, welche Käselaibe zwischen Positionen auf dem mit der Fördereinrichtung zur Schmiereinrichtung geförderten Käsebrett und in der Schmiervorrichtung verschiebbar macht.

Eine bevorzugte Ausführungsform umfasst eine Schmiereinrichtung mit Drehtellern, drehbaren Tellerbürsten, drehbaren Randbürsten und Zuführungen für Flüssigkeit, wobei die Tellerbürsten mit vorgebbaren Anpresskräften an Käseoberflächen und die Randbürsten mit an den Käserand angepassten, vorzugsweise während des Drehens der Drehteller verstellbaren, Positionen zur Bearbeitung der Käselaibe einsetzbar sind.

Damit die Käselaibe beim Schmieren auch gewendet werden können, umfasst die Schmiervorrichtung eine Wendeeinrichtung, welche Käselaibe so zu wenden vermag, dass die Unterseiten und die Oberseiten der Käselaibe ihre jeweiligen Relativpositionen wechseln.

Anhand von zwei Figuren wird die Erfindung im Folgenden näher beschrieben. Dabei zeigen
- Figur 1: eine perspektivische Darstellung einer Käsepflegevorrichtung, und
- Figur 2: eine Draufsicht auf die in Fig. 1 dargestellte Vorrichtung.

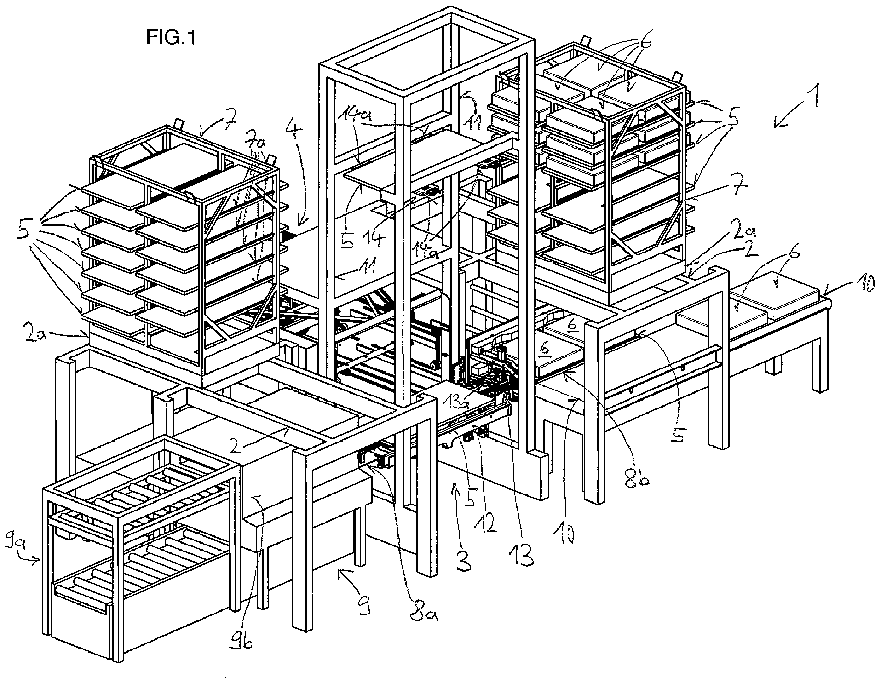

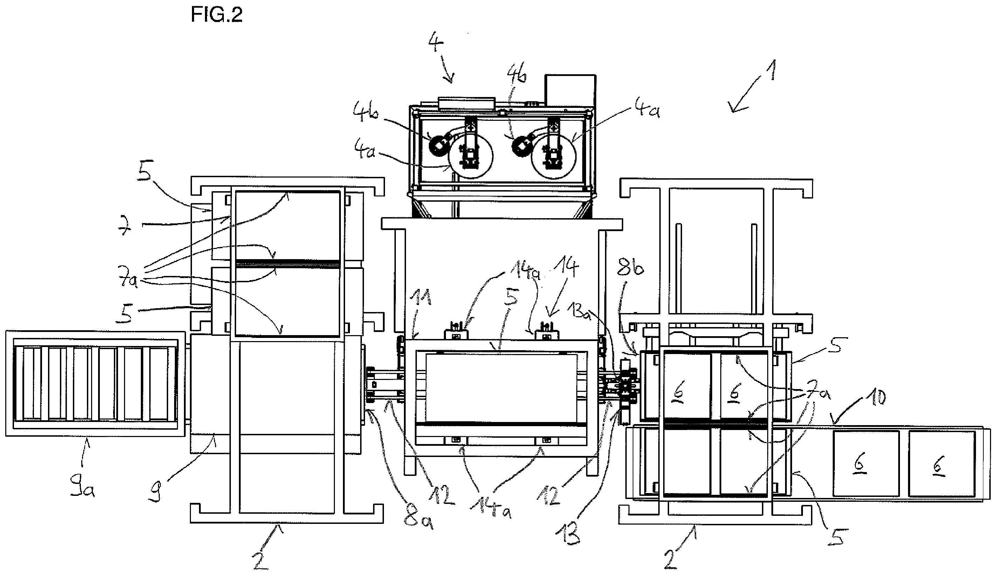

Die Figuren 1 und 2 zeigen eine Käsepflegevorrichtung 1 mit zwei Hordenaufnahmen 2, mit einer Fördereinrichtung 3 und mit einer Schmiereinrichtung 4. Die Fördereinrichtung 3 kann Käsebretter 5 mit Käselaiben 6 zwischen einer auf einer Hordenaufnahme 2 angeordneten Horde 7 und der Schmiereinrichtung 4 bewegen.

Die dargestellte Käsepflegevorrichtung umfasst eine erste Übergabeeinrichtung 8a und eine zweite Übergabeeinrichtung 8b. Die erste Übergabeeinrichtung 8a ist einer Käsebrett-Wascheinrichtung 9 zugeordnet und macht Käsebretter 5 ohne Käselaibe 6 zwischen der Fördereinrichtung 3 und der Käsebrett-Wascheinrichtung 9 übergebbar. Die zweite Übergabeeinrichtung 8b ist einer Umlagerungsstrecke 10 zugeordnet und macht Käsebretter mit Käselaiben 5 von und zur Fördereinrichtung 3 und Käselaibe 6 zwischen einem Käsebrett auf der zweiten Übergabeeinrichtung 8b und der Umlagerungsstrecke 10 übergebbar.

Beide Übergabeeinrichtungen 8a, 8b sind je unterhalb einer der Hordenaufnahmen 2 und somit je getrennt von den Bereichen von auf den Hordenaufnahmen 2 stehenden Horden 7 angeordnet. In der dargestellten Ausführungsform sind die beiden Übergabeeinrichtungen 8a, 8b auf voneinander abgewandten Seiten der Fördereinrichtung 3 positioniert.

Die Fördereinrichtung 3 macht Käsebretter 5 mit oder ohne Käselaibe 6 zwischen einer auf der mindestens einen Hordenaufnahme 2 angeordneten Horde 7, der Schmiereinrichtung 4 und den beiden Übergabeeinrichtungen 8a, 8b bewegbar.

In der dargestellten Ausführungsform umfasst die Fördereinrichtung 3 eine Vertikalführung 11 mit Vertikalantrieb und eine Aufnahmeeinheit 12 zum Aufnehmen eines Käsebrettes 5. Die Aufnahmeeinheit 12 wird in der Vertikalführung 11 vom Vertikalantrieb zu vorgebbaren Vertikalpositionen bewegt.

Die Aufnahmeeinheit 12 erstreckt sich in einer Aufnahmerichtung über eine Aufnahmelänge, die mindestens so gross ist, wie Länge von aufzunehmenden Käsebrettern 5. Die Aufnahmeeinheit 12 umfasst eine Greifeinrichtung 13, welche in der Aufnahmerichtung über die Aufnahmelänge zwischen zwei Endpositionen verfahrbar ist und einen Greifer 13a umfasst. Wenn bei einer Endposition ein Käsebrett 5 angeordnet ist, so kann dessen der Aufnahmeeinheit 12 zugewandter Endbereich mit dem Greifer 13a festgeklemmt werden.

Wenn die Greifeinrichtung 13 mit festgeklemmtem Käsebrett 5 von der Endposition wegbewegt wird, gelangt das Käsebrett 5 auf die Aufnahmeeinheit 12. Wenn ein Käsebrett 5 vollständig auf der Aufnahmeeinheit 12 aufgenommen ist, kann es mit einer Bewegung der Aufnahmeeinheit 12 in der Vertikalführung 11 an eine gewünschte Vertikalposition bewegt werden.

Wenn die mit der Aufnahmeeinheit 12 angefahrene Vertikalposition der Schmiereinrichtung 4 zugeordnet ist, werden die Käselaibe 6 vom Käsebrett 5 an die Schmiereinrichtung 4 übergeben oder von dieser übernommen. Für die Bewegung der Käselaibe 6 zwischen der Schmiereinrichtung 4 und einem bei der Schmiereinrichtung 4 positionierten Käsebrett 5 umfasst die Schmiereinrichtung 4 vorzugsweise eine Schiebeeinrichtung. Damit die Käselaibe 6 beim Schmieren auch gewendet werden können, umfasst die Schmiereinrichtung 4 vorzugsweise eine Wendeeinrichtung, welche Käselaibe 6 so zu wenden vermag, dass die Unterseiten und die Oberseiten der Käselaibe 6 ihre jeweiligen Relativpositionen wechseln.

Zum Schmieren umfasst die Schmiereinrichtung vorzugsweise Drehteller, drehbare Tellerbürsten 4a, drehbare Randbürsten 4b und Zuführungen für Flüssigkeit, wobei die Tellerbürsten 4a mit vorgebbaren Anpresskräften an Käseoberflächen und die Randbürsten 4b mit an den Käserand angepassten Positionen zur Bearbeitung der Käselaibe 6 einsetzbar sind.

Wenn die Vertikalposition der Aufnahmeeinheit 12 einem Tragbereich 7a einer auf einer Hordenaufnahme 2 angeordneten Horde 7 zugeordnet ist, wird das Käsebrett auf den Tragbereich 7a übergeben oder von diesem übernommen.

Wenn die Vertikalposition der Aufnahmeeinheit 12 einem Platz einer Übergabeeinrichtung 8a, 8b zugeordnet ist, wird das Käsebrett 5 mit oder ohne Käselaibe 6 an die Übergabeeinrichtung 8a, 8b übergeben oder von dieser übernommen.

In der dargestellten Ausführungsform werden bei der ersten Übergabeeinrichtung 8a Käsebretter 5 ohne Käselaibe 6 zwischen der Fördereinrichtung 3 und der Käsebrett-Wascheinrichtung 9 übergeben. Die erste Übergabeeinrichtung 8a umfasst auf einer ersten Höhe eine Einführung in die Käsebrett-Wascheinrichtung 9 und auf einer zweiten Höhe eine Ausgabe aus der Käsebrett-Wascheinrichtung 9. Wenn ungewaschene oder gewaschene Käsebretter 5 nicht immer direkt weitergeführt werden können, ist es zweckmässig, wenn die Käsebrett-Wascheinrichtung 9 einen Speicher 9a für Käsebretter 5 aufweist. Die gewaschenen Käsebretter 5 werden dann weitergeführt, wenn die Fördereinrichtung 3 dafür freisteht.

Damit eine Seite der Käsebretter 5 optimal gereinigt werden kann, umfasst die Käsebrett-Wascheinrichtung 9 vorzugsweise mindestens eine im Gehäuse 9b der Käsebrett-Wascheinrichtung 9 angeordnete Bürste, welche mit einer Brettseite in Reinigungskontakt gelangt.

Bei der zweiten Übergabeeinrichtung 8b werden Käsebretter 5 mit oder ohne Käselaibe 6 zwischen der Fördereinrichtung 3 und der zweiten Übergabeeinrichtung 8b übergeben. Wenn Käsebretter 5 mit Käselaiben übergeben werden, so werden die Käselaibe 6 zwischen einem auf der zweiten Übergabeeinrichtung 8b angeordneten Käsebrett 5 und der Umlagerungsstrecke 10 übergeben. Für die Bewegung der Käselaibe 6 zwischen einem auf der zweiten Übergabeeinrichtung 8b angeordneten Käsebrett 5 und der Umlagerungsstrecke 10 wird vorzugsweise eine Schiebevorrichtung eingesetzt. Über die Umlagerungsstrecke 10, die vorzugsweise ein Förderband umfasst, gelangen Käselaibe 6 in die Käsepflegevorrichtung 1 oder werden aus dieser abgeführt.

Die zweite Übergabeeinrichtung 8b kann ein Käsebrett 5 ohne Käselaib 6 von der Fördereinrichtung 3 übernehmen, um ein leeres Käsebrett 5 für die Aufnahme von Käselaiben 6 von der Umlagerungsstrecke 10 bereitzustellen.

Um Käsebretter 5 mit oder ohne Käselaibe 6 zwischen den beidseits der Vertikalführung 11 angeordneten Übergabeeinrichtungen 8a, 8b zu übergeben umfasst die Fördereinrichtung 3 eine Greifwechsel-Einrichtung 14. Die Greifwechsel-Einrichtung 14 ermöglich den Wechsel der Greifeinrichtung 13 und somit des Greifers 13a in Aufnahmerichtung vom einen Käsebrettende zum andern, bzw. von einer Endposition der Greifeinrichtung 13 zur anderen. Dazu umfasst die dargestellte Greifwechsel-Einrichtung 14 eine Ablage in der Form von zwei Tragprofilen 14a, die unter das Käsebrett 5 bewegt werden können und auf welchen die Fördereinrichtung 3 bei gelöstem Greifer 13a ein Käsebrett 5 belassen kann, um die Aufnahmeeinheit 12 ohne Käsebrett 5 nach unten zu bewegen.

Die Tragprofile der Greifwechsel-Einrichtung 14 sind einer Vertikalposition der Vertikalführung 3 zugeordnet. Nach der Bewegung der Aufnahmeeinheit 12 nach unten liegt das Käsebrett 5 auf den Tragprofilen auf und bei der nach unten bewegten Aufnahmeeinheit 12 kann die Greifeinrichtung 13 zur anderen Endpositionen bewegt werden. Danach kann die Aufnahmeeinheit 12 wieder zu den Tragprofilen bewegt werden, um mit dem neu positionierten Greifer 13a das Käsebrett 5 zu ergreifen. Danach werden die Tragprofile unter dem Käsebrett 5 aus dem Bereich der Vertikalführung 11 wegbewegt und das Käsebrett 5 kann auf der Aufnahmeeinheit 12 zu einer gewünschten Vertikalposition bewegt werden. Weil die Greifeinrichtung 13 beim Käsebrett 5 die Seite gewechselt hat, kann das von einer der beiden Übergabeeinrichtungen 8a, 8b übernommene Käsebrett 5 mit oder ohne Käselaibe 6 an die andere der beiden Übergabeeinrichtungen 8a, 8b übergeben werden.

Die dargestellte Ausführungsform kann auf engem Raum mit wenigen Komponenten verschiedene Behandlungen der Käselaibe 6 und der Käsebretter 5 gewährleisten.

Damit das Bereitstellen von Horden 7 auf den beiden Hordenaufnahmen 2 ohne grössere Unterbrüche gewährleistet werden kann, umfassen die Hordenaufnahmen 2 je eine horizontale Verschiebeeinrichtung 2a. Mit den horizontalen Verschiebeeinrichtungen 2a können Horden 7 so positioniert werden, dass die Fördereinrichtung 3 Käsebretter 5 in die Horde 7 und aus der Horde 7 bewegen kann.

In der dargestellten Ausführungsform sind die Hordenaufnahmen 2 in Aufnahmerichtung beidseits der Vertikalführung 11 bzw. der Aufnahmeeinheit 12 angeordnet, eine davon oberhalb der ersten und eine davon oberhalb der zweiten Übergabeeinrichtung 8a, 8b.

## Patentansprüche

1. Stationäre Käsepflegevorrichtung (1) zum Behandeln von in Horden (7) auf Käsebrettern (5) gelagerten Käselaiben (6) mit mindestens einer Hordenaufnahme (2), mit einer Fördereinrichtung (3) und mit einer Schmiereinrichtung (4), wobei die Fördereinrichtung (3) Käsebretter (5) mit Käselaiben (6) zwischen einer auf der mindestens einen Hordenaufnahme (2) angeordneten Horde (7) und der Schmiereinrichtung (4) bewegbar macht, wobei die stationäre Käsepflegevorrichtung (1) mindestens eine Übergabeeinrichtung (8a, 8b) für Käsebretter (5) umfasst, welche vom Bereich einer auf der mindestens einen Hordenaufnahme (2) angeordneten Horde (7) getrennt angeordnet ist und Käsebretter (5) an die Fördereinrichtung (3) übergebbar und/oder von der Fördereinrichtung (3) aufnehmbar macht, sodass die Fördereinrichtung (3) Käsebretter (5) mit oder ohne Käselaibe (6) zwischen einer auf der mindestens einen Hordenaufnahme (2) angeordneten Horde (7), der Schmiereinrichtung (4) und der mindestens einen Übergabeeinrichtung (8a, 8b) bewegbar macht.

2. Stationäre Käsepflegevorrichtung (1) nach Anspruch 1, wobei die stationäre Käsepflegevorrichtung (1) eine Käsebrett-Wascheinrichtung (9) und eine erste Übergabeeinrichtung (8a) umfasst, wobei die erste Übergabeeinrichtung (8a) Käsebretter (5) ohne Käselaibe (6) zwischen der Fördereinrichtung (3) und der Käsebrett-Wascheinrichtung (9) übergebbar macht.

3. Stationäre Käsepflegevorrichtung (1) nach Anspruch 2, wobei die erste Übergabeeinrichtung (8a) auf einer ersten Höhe eine Einführung in die Käsebrett-Wascheinrichtung (9) und auf einer zweiten Höhe eine Ausgabe aus der Käsebrett-Wascheinrichtung (9) umfasst.

4. Stationäre Käsepflegevorrichtung (1) nach Anspruch 2 oder 3, wobei die Käsebrett-Wascheinrichtung (9) mindestens eine Bürste umfasst, welche mit mindestens einer Brettseite in Reinigungskontakt gelangt.

5. Stationäre Käsepflegevorrichtung (1) nach einem der Ansprüche 1 bis 4, wobei die stationäre Käsepflegevorrichtung (1) eine zweite Übergabeeinrichtung (8b) und eine Umlagerungsstrecke (10) umfasst und dass zwischen der Fördereinrichtung (3) und der zweiten Übergabeeinrichtung (8b) Käsebretter (5) mit Käselaiben (6) übergebbar sind und dass zwischen einem Käsebrett (5) auf der zweiten Übergabeeinrichtung (8b) und der Umlagerungsstrecke (10) Käselaibe (6) übergebbar sind, wobei die Umlagerungsstrecke (10) Käselaibe (6) in die stationäre Käsepflegevorrichtung (1) einführbar oder aus dieser abführbar macht.

6. Stationäre Käsepflegevorrichtung (1) nach einem der Ansprüche 1 bis 5, wobei die Fördereinrichtung (3) eine Vertikalführung (11) mit Vertikalantrieb und eine Aufnahmeeinheit (12) zum Aufnehmen eines Käsebrettes (5) umfasst, wobei die Aufnahmeeinheit (12) in der Vertikalführung (11) vom Vertikalantrieb zu vorgebbaren Vertikalpositionen bewegbar ist und sich die Aufnahmeeinheit (12) in einer Aufnahmerichtung über eine Aufnahmelänge erstreckt, die mindestens so gross ist, wie Länge von aufzunehmenden Käsebrettern (5).

7. Stationäre Käsepflegevorrichtung (1) nach Anspruch 6, wobei die Aufnahmeeinheit (12) eine Greifeinrichtung (13) umfasst, welche in der Aufnahmerichtung über die Aufnahmelänge zwischen zwei Endpositionen verfahrbar ist und einen Greifer (13a) umfasst, welcher einen Endbereich eines Käsebretts (5) festzuklemmen vermag, wobei ein festgeklemmtes Käsebrett (5) durch eine Bewegung der Greifeinrichtung (13) in Aufnahmerichtung auf die Aufnahmeeinheit (12), oder von dieser weg, bewegt wird.

8. Stationäre Käsepflegevorrichtung (1) nach Anspruch 7, wobei in Aufnahmerichtung beidseits der Vertikalführung (11) je eine Übergabeeinrichtung (8a, 8b) angeordnet ist.

9. Stationäre Käsepflegevorrichtung (1) nach Anspruch 8, wbei eine Greifwechsel-Einrichtung (14) eingesetzt ist, welche bei einem Käsebrett (5) den Wechsel der Greifeinrichtung (13) in Aufnahmerichtung vom einen Käsebrettende zum andern, bzw. von einer Endposition der Greifeinrichtung (13) zur anderen, ermöglicht und dazu vorzugsweise eine Ablage umfasst, auf welcher die Fördereinrichtung (3) bei gelöstem Greifer (13a) ein Käsebrett (5) belassen kann, um dieses nach einer Bewegung der Greifeinrichtung (13) zur anderen Endpositionen mit dem Greifer (13a) dort wieder zu greifen.

10. Stationäre Käsepflegevorrichtung (1) nach einem der Ansprüche 1 bis 9, wobei mindestens eine Übergabeeinrichtung (8a, 8b) vertikal unterhalb der mindestens einen Hordenaufnahme (2) angeordnet ist.

11. Stationäre Käsepflegevorrichtung (1) nach einem der Ansprüche 1 bis 10, wobei die mindestens eine Hordenaufnahme (2) eine horizontale Verschiebeeinrichtung (2a) umfasst, welche eine Horde (7) so positionierbar macht, dass die Fördereinrichtung (3) Käsebretter (5) in die Horde (7) und aus der Horde (7) zu bewegen vermag.

12. Stationäre Käsepflegevorrichtung (1) nach einem der Ansprüche 1 bis 11, wobei die Schmiereinrichtung (4) eine Schiebevorrichtung umfasst, welche Käselaibe (6) zwischen Positionen auf dem mit der Fördereinrichtung (3) zur Schmiereinrichtung (4) geförderten Käsebrett (5) und in der Schmiervorrichtung (4) verschiebbar macht.

13. Stationäre Käsepflegevorrichtung (1) nach einem der Ansprüche 1 bis 12, wobei die Schmiereinrichtung (4) Drehteller, drehbare Tellerbürsten (4a), drehbare Randbürsten (4b) und Zuführungen für Flüssigkeit umfasst, wobei die Tellerbürsten (4a) mit vorgebbaren Anpresskräften an Käseoberflächen und die Randbürsten (4b) mit an den Käserand angepassten, vorzugsweise während des Drehens der Drehteller verstellbaren, Positionen zur Bearbeitung der Käselaibe (6) einsetzbar sind.

14. Stationäre Käsepflegevorrichtung (1) nach einem der Ansprüche 1 bis 12, wobei die Schmiervorrichtung (4) eine Wendeeinrichtung umfasst, welche Käselaibe (6) so zu wenden vermag, dass die Unterseiten und die Oberseiten der Käselaibe (6) ihre jeweiligen Relativpositionen wechseln.

## Claims

1. A stationary cheese treatment device (1) for the treatment of cheese wheels (6) stored in racks (7) on cheese boards (5), with at least one rack receptacle (2), a conveying means (3) and a smearing means (4), wherein the conveying means (3) enables cheese boards (5) with cheese wheels (6) to be moved between a rack (7) arranged on the at least one rack receptacle (2) and the smearing means (4), wherein the stationary cheese treatment device (1) comprises at least one transfer means (8a, 8b) for cheese boards (5) which is arranged separately from the region of a rack (7) arranged on the at least one rack receptacle (2) and enables cheese boards (5) to be transferred onto the conveying means (3) and/or received from the conveying means (3), such that the conveying means (3) enables cheese boards (5) with or without cheese wheels (6) to be moved between a rack (7) arranged on the at least one rack receptacle (2), the smearing means (4) and the at least one transfer means (8a, 8b).

2. The stationary cheese treatment device (1) according to Claim 1, wherein the stationary cheese treatment device (1) comprises a cheese board washing means (9) and a first transfer means (8a), wherein the first transfer means (8a) enables cheese boards (5) without cheese wheels (6) to be transferred between the conveying means (3) and the cheese board washing means (9).

3. The stationary cheese treatment device (1) according to Claim 2,
wherein the first transfer means (8a) comprises an introduction into the cheese board washing means (9) at a first level and an output from the cheese board washing means (9) at a second level.

4. The stationary cheese treatment device (1) according to Claim 2 or 3, wherein the cheese board washing means (9) comprises at least one brush which comes into cleaning contact with at least one side of the board.

5. The stationary cheese treatment device (1) according to any one of Claims 1 to 4, wherein the stationary cheese treatment device (1) comprises a second transfer means (8b) and an exchange line (10) and wherein cheese boards (5) with cheese wheels (6) are transferable between the conveying means (3) and the second transfer means (8b), and wherein cheese wheels (6) are transferable between a cheese board (5) on the second transfer means (8b) and the exchange line (10), wherein the exchange line (10) enables cheese wheels (6) to be introduced into the stationary cheese treatment device (1) or removed therefrom.

6. The stationary cheese treatment device (1) according to any one of Claims 1 to 5, wherein the conveying means (3) comprises a vertical guide (11) with vertical drive and a receiving unit (12) for receiving a cheese board (5), wherein the receiving unit (12) is movable by the vertical drive in the vertical guide (11) into predeterminable vertical positions and the receiving unit (12) extends in a receiving direction over a receiving length which is at least as great as the length of cheese boards (5) to be received.

7. The stationary cheese treatment device (1) according to Claim 6, wherein the receiving unit (12) comprises a gripping means (13) which is displaceable in the receiving direction over the receiving length between two end positions and comprises a gripper (13a) which is able to clamp fast an end region of a cheese board (5), wherein a clamped-fast cheese board (5) is moved by a movement of the gripping means (13) in the receiving direction onto the receiving unit (12), or away therefrom.

8. The stationary cheese treatment device (1) according to Claim 7, wherein a transfer means (8a, 8b) is arranged on either side of the vertical guide (11) in the receiving direction.

9. The stationary cheese treatment device (1) according to Claim 8, wherein a grip changeover means (14) is used which, in the case of a cheese board (5), enables the gripping means (13) to change over in the receiving direction from one cheese board end to the other, or from one end position of the gripping means (13) to the other, and to this end preferably comprises a rest on which the conveying means (3) can leave a cheese board (5) when the gripper (13a) is released in order for said board to be gripped there again with the gripper (13a) once the gripping means (13) has moved to the other end position.

10. The stationary cheese treatment device (1) according to any one of Claims 1 to 9, wherein at least one transfer means (8a, 8b) is arranged vertically below the at least one rack receptacle (2).

11. The stationary cheese treatment device (1) according to any one of Claims 1 to 10, wherein the at least one rack receptacle (2) comprises a horizontal displacement means (2a), which enables a rack (7) to be positionable such that the conveying means (3) is able to move cheese boards (5) into the rack (7) and out of the rack (7).

12. The stationary cheese treatment device (1) according to any one of Claims 1 to 11, wherein the smearing means (4) comprises a pusher device, which enables cheese wheels (6) to be pushed between positions on the cheese board (5) conveyed with the conveying means (3) to the smearing means (4) and positions in the smearing device (4).

13. The stationary cheese treatment device (1) according to any one of Claims 1 to 12, wherein the smearing means (4) comprises rotary discs, rotatable disc brushes (4a), rotatable edge brushes (4b) and feed lines for liquid, wherein, to treat the cheese wheels (6), the disc brushes (4a) are applicable with predeterminable contact forces against cheese surfaces and the edge brushes (4b) are applicable with positions adapted to the cheese edge and preferably adjustable during rotation of the rotary discs.

14. The stationary cheese treatment device (1) according to any one of Claims 1 to 12, wherein the smearing device (4) comprises a turning means which is able to turn cheese wheels (6) in such a way that the bottoms and the tops of the cheese wheels (6) exchange their respective positions.

## Revendications

1. Dispositif de soin pour fromages stationnaire (1) pour le traitement de meules de fromage (6) entreposées dans des claies (7) sur des planches à fromage (5) avec au moins une réception de claies (2), avec un dispositif de transport (3) et avec un dispositif de lubrification (4), le dispositif de transport (3) rendant déplaçables des planches à fromage (5) avec des meules de fromage (6) entre une claie (7), disposée sur l'au moins une réception de claie (2), et le dispositif de lubrification (4), le dispositif de soin pour fromages stationnaire (1) comprenant au moins un dispositif de transfert (8a, 8b) pour planches à fromage (5), lequel est disposé séparément de la zone d'une claie (7) disposée sur l'au moins une réception de claie (2) et permet de transférer des planches à fromage (5) au dispositif de transport (3) et/ou de recevoir celles-ci du dispositif de transport (3), de telle sorte que le dispositif de transport (3) permet de déplacer les planches à fromage (5) avec ou sans meule de fromage (6) entre une claie (7) disposée sur l'au moins une réception de claie (2), le dispositif de lubrification (4) et l'au moins un dispositif de transfert (8a, 8b).

2. Dispositif de soin pour fromages stationnaire (1) selon la revendication 1, le dispositif de soin pour fromages stationnaire (1) comprenant un dispositif de lavage de planche à fromage (9) et un premier dispositif de transfert (8a), le premier dispositif de transfert (8a) permettant de transférer les planches à fromage (5) sans meules de fromage (6) entre le dispositif de transport (3) et le dispositif de lavage de planche à fromage (9).

3. Dispositif de soin pour fromages stationnaire (1) selon la revendication 2, le premier dispositif de transfert (8a) à une première hauteur comprenant une introduction dans le dispositif de lavage de planche à fromage (9) et, à une deuxième hauteur, une sortie du dispositif de lavage de planche à fromage (9).

4. Dispositif de soin pour fromages stationnaire (1) selon la revendication 2 ou 3, le dispositif de lavage de planche à fromage (9) comprenant au moins une brosse, laquelle entre en contact de nettoyage avec au moins un côté de planche.

5. Dispositif de soin pour fromages stationnaire (1) selon l'une des revendications 1 à 4, le dispositif de soin pour fromages stationnaire (1) comprenant un deuxième dispositif de transfert (8b) et une voie de repositionnement (10), et des planches à fromage (5) avec des meules de fromage (6) pouvant être transférées entre le dispositif de transport (3) et le deuxième dispositif de transfert (8b), et des meules de fromage (6) pouvant être transférées entre une planche à fromage (5) sur le deuxième dispositif de transfert (8b) et la voie de repositionnement (10), la voie de repositionnement (10) permettant d'introduire des meules de fromage (6) dans le dispositif de soin pour fromages stationnaire (1) ou de les retirer de celui-ci.

6. Dispositif de soin pour fromages stationnaire (1) selon l'une des revendications 1 à 5, le dispositif de transport (3) comprenant un guidage vertical (11) avec entraînement vertical et une unité de réception (12) pour la réception d'une planche à fromage (5), l'unité de réception (12) étant déplaçable dans le guidage vertical (11) par l'entraînements vertical vers des positions verticales prédéfinies et l'unité de réception (12) s'étendant dans une direction de réception sur une longueur de réception, laquelle est au moins égale à la longueur de planches à fromage (5) devant être réceptionnées.

7. Dispositif de soin pour fromages stationnaire (1) selon la revendication 6, l'unité de réception (12) comprenant un dispositif de préhension (13), lequel est déplaçable dans la direction de réception sur la longueur de réception entre deux positions finales et comprend une pince (13a), laquelle peut serrer une zone d'extrémité d'une planche à fromage (5), une planche à fromage (5) serrée étant déplacée par un mouvement du dispositif de préhension (13) dans la direction de réception vers l'unité de réception (12) ou en s'éloignant de celle-ci.

8. Dispositif de soin pour fromages stationnaire (1) selon la revendication 7, un dispositif de transfert (8a, 8b) étant respectivement disposé de chaque côté du guidage vertical (11), dans la direction de réception.

9. Dispositif de soin pour fromages stationnaire (1) selon la revendication 8, un dispositif d'échange de préhension (14) étant utilisé, lequel, sur une planche à fromage (5), permet le changement du dispositif de préhension (13) dans la direction de réception d'une extrémité de planche à fromage à l'autre, ou d'une position finale du dispositif de préhension (13) à l'autre, et comprend également de préférence un support sur lequel le dispositif de transport (3) peut déposer une planche à fromage (5) lorsque la pince (13a) est desserrée, pour l'y saisir à nouveau avec la pince (13a), après un mouvement du dispositif de préhension (13) vers l'autre position finale.

10. Dispositif de soin pour fromages stationnaire (1) selon l'une des revendications 1 à 9, au moins un dispositif de transfert (8a, 8b) étant disposé verticalement en dessous de l'au moins une réception de claie (2).

11. Dispositif de soin pour fromages stationnaire (1) selon l'une des revendications 1 à 10, l'au moins une réception de claie (2) comprenant un dispositif de déplacement horizontal (2a), lequel permet de positionner une claie (7) de telle sorte que le dispositif de transport (3) peut déplacer les planches à fromage (5) dans la claie (7) et hors de la claie (7).

12. Dispositif de soin pour fromages stationnaire (1) selon l'une des revendications 1 à 11, le dispositif de lubrification (4) comprenant un dispositif de poussée, lequel permet de déplacer des meules de fromage (6) entre des positions sur la planche à fromage (5) déplacée par le dispositif de transport (3) vers le dispositif de lubrification (4) et dans le dispositif de lubrification (4).

13. Dispositif de soin pour fromages stationnaire (1) selon l'une des revendications 1 à 12, le dispositif de lubrification (4) comprenant des plateaux tournants, des brosses circulaires tournantes (4a), des brosses de bord tournantes (4b) et des alimentations pour liquide, les brosses circulaires (4a) étant utilisables sur les surfaces de fromage avec des forces de pression spécifiables et les brosses de bord (4b) étant utilisables à des positions ajustées au bord de fromage, de préférence réglables pendant la rotation des plateaux tournants, pour le traitement des meules de fromage (6).

14. Dispositif de soin pour fromages stationnaire (1) selon l'une des revendications 1 à 12, le dispositif de lubrification (4) comprenant un dispositif de retournement, lequel permet de retourner des meules de fromage (6) de telle sorte que les faces inférieures et les faces supérieures des meules de fromage (6) échangent leurs positions relatives.
